(19) Europäisches Patentamt

European Patent Office

Office européen des brevets

(11) Veröffentlichungsnummer: **0 325 953 B1**

(12) # EUROPÄISCHE PATENTSCHRIFT

(45) Veröffentlichungstag der Patentschrift: **11.11.92**

(51) Int. Cl.⁵: **B64D 17/02**

(21) Anmeldenummer: **89100452.5**

(22) Anmeldetag: **12.01.89**

---

(54) **Gleitschirm.**

---

(30) Priorität: **28.01.88 DE 8800978 U**

(43) Veröffentlichungstag der Anmeldung:
**02.08.89 Patentblatt 89/31**

(45) Bekanntmachung des Hinweises auf die
Patenterteilung:
**11.11.92 Patentblatt 92/46**

(84) Benannte Vertragsstaaten:
**AT CH DE FR GB IT LI**

(56) Entgegenhaltungen:
**US-A- 3 412 963**

(73) Patentinhaber: **Graske, Wilhelm, Dr.**
**Tilsiter Weg 3**
**W-4044 Kaarst(DE)**

(72) Erfinder: **Graske, Wilhelm, Dr.**
**Tilsiter Weg 3**
**W-4044 Kaarst(DE)**

(74) Vertreter: **Paul, Dieter-Alfred, Dipl.-Ing.**
**Fichtestrasse 18**
**W-4040 Neuss 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 325 953 B1

## Beschreibung

Die Erfindung betrifft einen Gleitschirm mit einem flügelähnlichen Segel, an dessen Unterseite sich im wesentlichen parallel zur vorgesehenen Flugrichtung nach unten erstreckende Stege angebracht sind, wobei Fangleinen zumindest an den Stegen angreifen, deren freie Enden zu einer Trageinrichtung für die Aufnahme einer Person zusammenlaufen.

Solche Gleitschirme haben Ähnlichkeit mit Fallschirmen, sind aber dazu bestimmt, daß man mit ihnen gesteuerte Flüge von Bergen aus durchführen kann. Sie weisen ein rechteckiges Segel auf, an dessen Unterseite eine Vielzahl von Fangleinen angreifen, die zu einer Trageinrichtung für eine Person zusammenlaufen. Zusätzlich sind an der Hinterkante des Segels angreifende Steuerleinen vorgesehen, die von dem Piloten bedient werden können und mit denen das Segelprofil, insbesondere die Profilwölbung, verändert werden kann. Auf diese Weise läßt sich der Gleitschirm steuern.

Wichtig ist, daß der Gleitschirm seine Flugstabilität auch bei ungünstigen Windlagen weitgehend beibehält. Dies ist bisher nur mit Segelformen geglückt, bei denen das Segel aus zwei übereinander angeordneten Segeltuchflächen und diese in regelmäßigen Abständen verbindenden, vertikalen Zellwänden besteht (US-PS 3 285 546). Auf diese Weise werden zwischen den beiden Segeltuchflächen eine Vielzahl von nebeneinander angeordneten, röhrenförmigen Kammern gebildet, die nach vorne hin offen sind und in denen sich die anströmende Luft staut. Der dabei entstehende Staudruck bläht das Segel auf und gibt ihm Formstabilität.

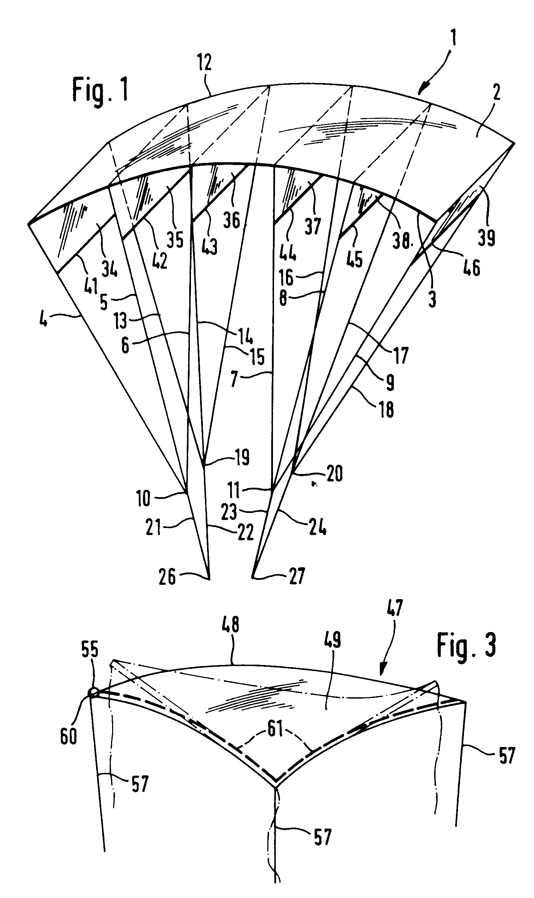

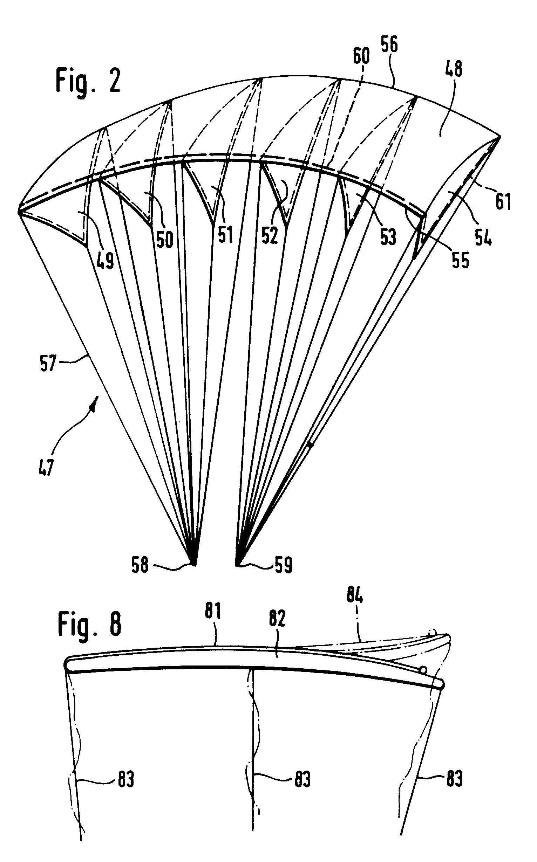

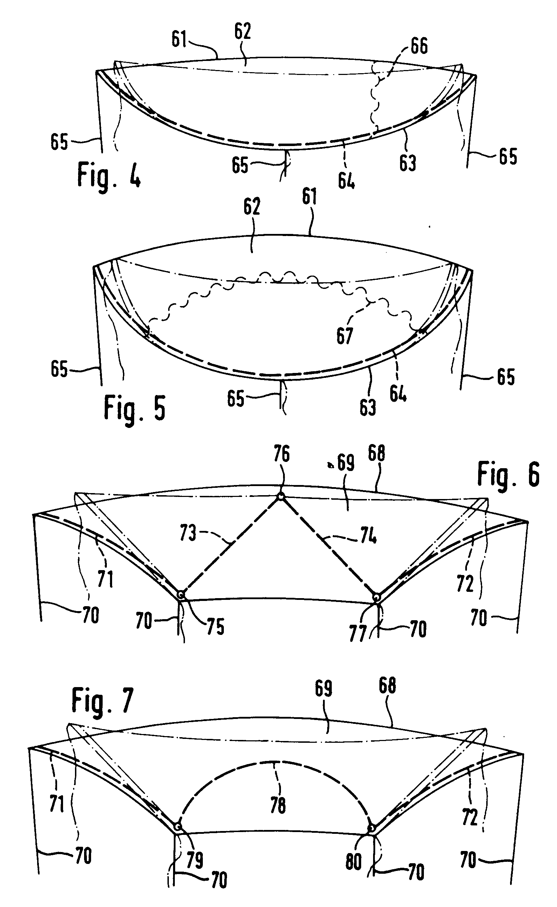

Eine Variante dieses Gleitschirms ist in der DE-AS 20 54 758 offenbart. Bei dem in den Figuren 1 bis 4 dargestellten Ausführungsbeispiel besteht das Segel nur aus einer Segeltuchfläche. An seiner Unterseite sind eine Vielzahl von im Querschnitt dreiecksförmigen, sich in Tiefenrichtung des Segels erstreckende Kammern angeordnet, die nach vorne hin offen sind und in denen sich die anströmende Luft staut. Der Staudruck sorgt hier ebenfalls für die Formstabilität des Segels. An den Unterkanten der Kammern greifen die Fangleinen an. Von deren Angriffspunkten gehen Versteifungsfelder und Versteifungsbänder aus.

Weitere Gleitschirme sind in den DE-GM 87 07 797.3 und DE-GM 87 09 923.3 beschrieben. Um eine bessere Sicherheit bei hohen Anstellwinkeln sowie bem Fliegen in Turbulenzen zu erreichen, wird in dem erstgenannten Gebrauchsmuster vorgeschlagen, daß sich die untere Segeltuchfläche nur über einen Teil der Profillänge erstreckt, daß in die obere Segeltuchfläche sich in Flugrichtung erstreckende Segellatten eingesetzt werden und daß die Profilnase durch eine Kunststoffolie oder Schaumplatten strömungsgünstig ausgebildet wird.

Eine Weiterentwicklung dieses Gleitschirms ist in dem zweitgenannten Gebrauchsmuster beschrieben. Dieser Gleitschirm zeichnet sich durch einen in die Profilnase eingeschobenen, flexiblen Stab mit Randbögen aus, wobei die Randbögen durch eine in das Achterliek der oberen Segeltuchfläche eingelassene Spannleine verbunden sind. In beiden Fällen greifen die Fangleinen, an denen die Trageinrichtung für die Aufnahme einer Person befestigt ist, an sich vom Segel nach unten erstreckenden, aus Segeltuch bestehenden Stegen an. Ein Teil der Fangleinen ist auch mit der Vorderkante des Segels verbunden. An der Hinterkante des Segels greifen sogenannte Bremsleinen an.

Die Stabilisierung des Segels von Gleitschirmen über Staudrucköffnungen hat den Nachteil, daß selbst der beste, zur Zeit auf dem Markt befindliche Gleitschirm nur eine Maximalgeschwindigkeit von 45 km/h und eine Gleitzahl von bis zu 5 bei ca. 30 km/h erreicht. Versuchsberechnungen haben ergeben, daß diese schlechten Werte im wesentlichen durch die Kammeröffnungen bewirkt werden, da sie für mehr als 50% des Gesamtwiderstandes verantwortlich sind. Die an sich guten Fluggeigenschaften der mit Staudruck stabilisierten Gleitschirme werden also mit relativ schlechten Gleitzahlen und Geschwindigkeiten erkauft. Diese schlechte Gleitzahl hat jedoch den Vorteil, daß der Gleitschirm pendelstabil um seine horizontale Querachse ist, da der Widerstand des Gleitschirms größer ist als der des Piloten.

Bessere Gleitzahlen sind erreichbar, wenn das Segel entsprechend dem in Figur (4) des DE-GM 87 09 923.3 gezeigten Vorschlag nur aus einer Segeltuchfläche hergestellt wird, da solche Gleitschirme einen wesentlich geringeren Widerstand haben. Berechnungen haben gezeigt, daß jedoch bei Erreichen einer Gleitzahl von 6 der Widerstand des Segels annähernd gleich groß wie der Widerstand des Piloten ist. Es entsteht eine hohe Instabilität um die horizontale Querachse mit der Folge, daß das Segel bei Auftriebsverlust beispielsweise in einer Fallböe nach vorne schießt. Es kommt zu lebensgefährlichen Flugzuständen. Außerdem sind solche Gleitschirme schwierig zu starten. Bei stärkerem Wind ist ein Start unmöglich.

Der Erfindung liegt deshalb die Aufgabe zugrunde, einen Gleitschirm so zu gestalten, daß er trotz wesentlich verbesserter Gleitzahl eine hohe Flugstabilität hat.

Diese Aufgabe wird erfindungsgemäß dadurch gelöst, daß die Stege mit Versteifungen versehen sind, die die Stege wenigstens unter der Zugbelastung der Fangleinen im Flug im wesentlichen in horizontaler Richtung aufspannen. Nach dem Grundgedanken der Erfindung werden also die Stege durch mit ihnen versehenen Versteifungen in Tiefenrichtung des Segels aufgespannt, wobei es für die hierdurch bedingte Wirkung ausreichend ist, wenn dieses Aufspannen erst unter Flugbelastung auftritt, also wenn die Zugkräfte der Fangleinen auf das Segel und/oder auf die Stege einwirken. Die solchermaßen stabilisierten Stege sorgen zum einen dafür, daß das Segel in horizontaler Richtung, also in Tiefenrichtung, nicht einfallen kann. Zum anderen können die Stege nicht - wie bei den vorbekannten Lösungen - seitlich ausweichen. Der auf sie wirkende Überdruck hat zur Folge, daß das Segel in Querrichtung, d. h. in Spannweitenrichtung, aufgespannt wird, ohne daß es hierfür weiterer, besonderer Maßnahmen, wie beispielsweise der Anordnung eines durchgehenden Holmes in der Vorderkante des Segels oder von strömungshemmenden Staudruckkammern im Segel bedarf. Das Segel wird mit den so ausgesteiften Stegen zuverlässig in Längs- und in Querrichtung formstabilisiert. Damit ist ein großer Schritt zur Erreichung einer Flugstabilität auch für Gleitschirme getan, die ein Segel aus nur einer einzigen Segeltuchfläche mit hoher Gleitzahl haben.

Als für die Flugstabilität günstig hat es sich erwiesen, wenigstens die außenliegenden Stege zur Hinterkante hin leicht konvergieren zu lassen.

Die Versteifungen der Stege können beispielsweise flächig ausgebildet sein. So können die Stege starre Bretter aufweisen oder daraus bestehen, was jedoch den Nachteil hat, daß sie für den Transport sperrig und schwer sind. Zur Vermeidung dieses Nachteils ist es deshalb zweckmäßiger, die Stege aus biegeschlaffem Material, beispielsweise Segeltuch oder besser noch Spinnakertuch, herzustellen und in die Stege Versteifungsstreben einzusetzen, die die Stege unter Spannung halten, zumindest unter Flugbelastung, wenn auf die Stege die von den Fangleinen ausgehenden Zugkräfte wirken.

Von besonderem Vorteil ist es, wenn die Versteifungsstreben federnd biegsam ausgebildet und derart in den Stegen angeordnet sind, daß das Segel im entlasteten Zustand wenigstens im hinteren Bereich hochgewölbt ist, die Versteifungsstreben bei Flugbelastung jedoch wenigstens im hinteren Bereich unter Bildung eines Tragflächenprofils nach unten federnd gebogen sind. Bei dieser Ausbildung und Anordnung werden die Versteifungsstreben unter Flugbedingungen, d.h. unter der Wirkung der nach unten gerichteten Zugkräfte der Fangleinen bei entsprechender Auslegung ihrer Längen, so gebogen, daß sich in etwa ein leicht gewölbtes Tragflächenprofil ausbildet. Bei einer eventuellen Entlastung, beispielsweise beim Einwirken einer Fallböe, verringern sich die Auftriebskräfte sowie die Zugkräfte an den Fangleinen derart, daß das Segel einfällt und sich die Versteifungsstreben federnd entspannen können und so das Segel zumindest im hinteren Bereich hochwölben. Diese hat eine erhebliche Vergrößerung des Widerstandes und damit eine Verringerung der Gleitzahl zur Folge und verhindert ein nach vorne Schießen des Segels und damit einen instabilen Flugzustand. Der Gleitschirm hat wieder Pendelstabilität, weil der Widerstand des Segels erheblich größer ist als der des Piloten. Mit dieser Maßnahme wird also eine hohe Nickstabilität um die horizontale Querachse erreicht, ohne daß hierfür bei normalem Flugzustand eine geringe Gleitzahl in Kauf genommen werden muß. Erstmals gelingt es, einen Gleitschirm mit hoher Gleitzahl flugstabil zu machen.

Empfehlenswert ist es, wenn im Bereich der Hinterkante des Segels und/oder der Stege Fangleinen angreifen, damit die Versteifungsstreben bei normaler Flugbelastung unter Bildung eines Tragflächenprofils leicht nach unten gebogen werden. Zweckmäßig ist es, daß Fangleinen an Vorder- und/oder Hinterkante des Segels jeweils im Bereich der Ebene der Stege angreifen, damit die Fangleinen besonders wirksam auf die Versteifungsstreben einwirken.

Der vorbeschriebene Grundgedanke der Erfindung läßt sich vielgestaltig ausführen. So besteht eine Möglichkeit darin, daß die Stege eine durchgehende gebogene Unterkante aufweisen und in diese entsprechend gebogene Versteifungsstreben eingesetzt sind, welche die Stege aufspannen. Unter Zugbelastung werden die vorderen und hinteren Enden etwas nach unten gebogen, so daß sich in etwa ein Tragflächenprofil ergibt. Bei Entlastung federn die Versteifungsstreben nach oben, so daß sich ein Profil mit hohem Widerstand ergibt und der Gleitschirm Pendelstabilität bekommt. Um die Wirkung des Zurückfederns bei Entlastung zu verstärken, können in den Stegen zusätzliche Zugfedern angeordnet sein, die zumindest mit den hinteren Enden, aber auch mit den vorderen und den hinteren Endbereichen der Versteifungsstreben in Verbindung stehen.

Eine weitere Alternative besteht darin, daß die Stege Dreiecksform mit nach unten gerichteter Dreiecksspitze haben und daß die freien Dreieckskanten jeweils mit Versteifungsstreben versehen sind, die zweckmäßigerweise im Bereich der freien Dreiecksspitzen der Stege miteinander gekoppelt sind. Bei Flugbelastung biegen sich die Versteifungsstreben konkav nach unten, so daß das Segel ein Tragflächenprofil einnimmt. Bei Entlastung strecken sich die Versteifungsstreben, so daß das Segel in Tiefenrichtung einen S-Schlag mit hochstehender Hinterkante erhält. Der hierdurch bewirkte Widerstandsanstieg bremst das Segel, wodurch ein Überkippen nach vorne vermieden wird. Der Gleitschirm hat dann Pendelstabilität.

Eine weitere Ausführungsform ist dadurch gekennzeichnet, daß die Stege Trapezform haben und zumindest die freien Hinterkanten der Stege Versteifungsstreben aufweisen. Zweckmäßigerweise sollten sowohl die freien Vorder- als auch die freien Hinterkanten Versteifungsstreben aufweisen, wobei es ferner von Vorteil ist, wenn die unteren Enden der Versteifungsstreben über wenigstens eine weitere Verbindungsstrebe miteinander gekoppelt sind. Die Koppelung kann dadurch hergestellt werden, daß die Verbindungsstreben unter Federvorspannung in den Steg hochgebogen sind oder daß in jedem Steg zwei Verbindungsstreben vorgesehen sind, deren miteinander verbundene Enden sich im Abstand zur Unterkante des jeweiligen Steges treffen. Die Wirkung ist die gleiche wie bei den dreiecksförmigen Stegen, d.h. die Versteifungsstreben werden bei Flugbelastung leicht konkav gebogen, so daß ein Tragflügelprofil entsteht, während sie sich bei Entlastung der Fangleinen nach oben strecken und so ein Segelprofil mit hohem Widerstand erzeugen.

Eine ähnliche Wirkung kann dadurch erzielt werden, daß in das Segel in Flugrichtung verlaufende Segellatten eingesetzt werden, die federnd biegsam ausgebildet sind und im entlasteten Zustand nach hinten leicht hochgebogen sind, bei Flugbelastung jedoch wenigstens im hinteren Bereich unter Bildung eines Tragflächenprofils aus der hochgebogenen Stellung nach unten federnd gebogen sind. Das mit solchen Segellatten versehene Segel ändert seine Geometrie ebenfalls je nach Flugzustand, d.h. bei normalem Flugzustand werden die Segellatten aufgrund der von den Fangleinen ausgehenden Zugkräfte leicht nach unten gebogen, so daß das Segel ein Tragflächenprofil erhält. Bei Entlastung, beispielsweise bei Einwirkung einer Fallböe, biegen sich die hinteren Enden der Segellatten wieder nach oben, so daß das Segel in Tiefenrichtung einen S-Schlag mit der Folge erhält, daß sich der Widerstand stark erhöht. Der Gleitschirm erreicht dann wieder Pendelstabilität. Dabei kann das Hochbiegen der Enden der Segellatten noch durch Zugfedern unterstützt oder sogar erst erzeugt werden, die zwischen den hinteren Enden und einem weiter vorn liegenden Punkt der Segellatten gespannt sind. Die Segellatten können zwischen den Anlenkpunkten der Zugfedern auch geteilt, d.h. gelenkig miteinander verbunden sein.

Die Segellatten erstrecken sich zweckmäßigerweise über die gesamte Tiefe des Segels, und sie sollten oberhalb der Stege angeordnet sein.

Eine weitere Stabilisierung des Segelprofils insbesondere bei einem Segel aus nur einer Segeltuchfläche kann dadurch erreicht werden daß, daß jeweils zwischen den Stegen bzw. den Segellatten in die Vorderkante des Segels einzelne, flexible Versteifungsholme eingearbeitet sind. Diese sollten elastisch biegsam sein. Beispielsweise sind hierfür schon Schlauchstücke ausreichend und zeichnen sich durch hohe Biegsamkeit aus, so daß das Segel zusammengelegt werden kann, ohne daß die Schlauchstücke herausgenommen werden müssen. Zu empfehlen ist dabei, daß die Vorderkante des Segels zwischen den Stegen bzw. den Versteifungsholmen jeweils leicht bogenförmig geschnitten ist und die Versteifungsholme unter Vorspannung stehen. Die Versteifungsholme sollten gelenkig miteinander verbunden sein.

In der Zeichnung ist die Erfindung an Hand von schematisch dargestellten Ausführungsbeispielen näher veranschaulicht. Es zeigen:

Figur (1)

die Ansicht eines Gleitschirms schräg von vorn;

Figur (2)

die Ansicht einer anderen Ausführungsform eines Gleitschirms schräg von vorn;

Figur (3)

einen Querschnitt durch den Gleitschirm gemäß Figur (2);

Figuren (4) bis (7)

Querschnitte durch weitere Gleitschirme mit verschiedenen Stegen;

Figur (8)

einen Querschnitt durch einen Gleitschirm mit Segellatten.

Der in Figur (1) dargestellte Gleitschirm (1) weist ein in etwa rechteckförmiges Segel (2) auf, das aus einer einzigen Segeltuchfläche aus Spinnakertuch besteht. An der Vorderkante (3) des Segels (2) greifen - im wesentlichen in gleichen Abständen - insgesamt sechs Fangleinen (4, 5, 6, 7, 9) an, von denen jeweils drei zu einem Punkt (10, 11) zusammenlaufen. Auch an der Hinterkante (12) des Segels (2) sind insgesamt sechs Fangleinen (13, 14, 15, 16, 17, 18) befestigt, von denen jeweils drei zu einem Punkt (19, 20) zusammenlaufen. Von diesen Punkten (10, 11, 19, 20) setzen sie sich in jeweils einem Fangleinenstück (21, 22, 23, 24) fort, wobei sich jeweils zwei der Fangleinenstücke (21, 22) bzw. (23, 24) einer Seite an den Punkten (26, 27) vereinigen. An diesen Punkten (26, 27) kann eine Halterung für eine Person eingeklinkt werden.

An der Unterseite des Segel (2) sind in regelmäßigen Abständen trapezförmige Stege (34, 35, 36, 37, 38, 39) aus Spinnakertuch angenäht. Sie erstrecken sich jeweils zwischen zwei in Flugrichtung - also senkrecht zu den Vorder- und Hinterkanten (3, 12) des Segels (2) - hintereinander angeordneten Fangleinen (4, 13) bzw. (5, 14) bzw. (6, 15) bzw. (7, 16) bzw. (8, 17) bzw. (9, 18). Ihre Vorder- und Hinterkanten sind an den betreffenden Fangleinen (4, 5, 6, 7, 8, 9, 13, 4, 5, 16, 17, 18) befestigt.

In die Unterkanten der Stege (34, 35, 36, 37, 38, 39) sind Versteifungsstreben (41, 42, 43, 44, 45, 46) eingearbeitet. Diese Versteifungsstreben (41, 42, 43, 44, 45, 46) stabilisieren die Stege (34, 35, 36, 37, 38, 39) derart, daß sie im Flugzustand praktisch starre Flächen bilden, sich also nicht nach außen biegen. Da sich im Flug zwischen den Stegen (34, 35, 36, 37, 38, 39) ein Überdruck bildet, wird das Segel (2) in Spannweitenrichtung, also quer zur Flugrichtung offengehalten, ohne daß es hierfür besonderer Verstrebungen im Segel (2) selbst bedarf. Beim Start öffnet sich der zunächst zusammengelegte Gleitschirm (1) unter Einwirkung der aerodynamischen Kräfte sehr schnell von selbst. Mangels weiterer Verstrebungen kann der Gleitschirm (1) auf ein kleines Maß zusammengepackt werden.

Der in Figur (2) dargestellte Gleitschirm (47) weist ebenfalls ein rechteckiges Segel (48) auf. An seiner Unterseite sind dreiecksförmige Stege (49, 50, 51, 52, 53, 54) aus Spinnakertuch angebracht, und zwar in regelmäßigen Abständen und sich in Flugrichtung, d.h. rechtwinklig zur Vorder- und Hinterkante (55, 56) des Segels (48) erstreckend. Ihre Oberkanten verlaufen über die gesamte Tiefe des Segels (48). Lediglich die beiden äußeren Stege (49, 54) laufen zur Hinterkante (56) des Segels (48) leicht zu, was dadurch bedingt ist, daß das Segel (48) an der Vorderkante (55) eine etwas größere Spannweite als an der Hinterkante (56) aufweist.

An allen drei Ecken der Stege (49, 50, 51, 52, 53, 54) sind Fangleinen - beispielhaft mit (57) bezeichnet - befestigt. Es liegen also hier immer jeweils drei Fangleinen (57) in Flugrichtung hintereinander. Die Fangleinen (57) einer Seite vereinigen sich jeweils an den Punkten (58) bzw. (59).

Die Vorderkante (55) des Segels (58) ist mit eingearbeiteten Gummischlauchabschnitten (60) versteift, die einen Durchmesser von 15 mm haben und sich jeweils zwischen zwei Stegen (49, 50, 51, 53, 54) erstrecken. Auf diese Weise bilden sich, wenn das Segel (48) von der Seite her einfallen will, trichterförmige Öffnungen, in denen sich genügend Staudruck aufbauen kann, um das Segel (48) wieder zu öffnen.

Die mit dem Segel (48) verbundenen Oberkanten der Stege (49, 50, 51, 52, 53, 54) sind leicht konvex geformt, um dem Segel (48) eine Profilhöhe von ca 1% zu geben. Die Vorder-und Hinterkanten der Stege (49, 50, 51, 52, 53) sind leicht konkav geschnitten. In diese Kanten sind dünne und elastische und gerade Glasfaserrohre als Versteifungsstreben - durch Strichelung angedeutet und beispielhaft mit (61) bezeichnet - eingenäht.

Aus Figur (3) is näher zu ersehen, wie sich die Stege (49, 50, 51, 52, 53, 54) - gezeigt am Steg (49) - bei verschiedenen Flugzuständen verhalten. Dabei ist der normale Flugzustand mit durchgezogenen Linien verdeutlicht. Es ist zu sehen, daß die Versteifungsstreben (61) leicht konkav, also nach unten, gebogen sind. Diese wird durch die an Vorder- und Hinterkante des Segels (48) angreifenden Fangleinen (57) bewirkt, die gegenüber der an den mittleren Dreiecksspitzen der Stege (49, 50, 51, 52, 53, 54) angreifenden Fangleinen (57) so kurz gehalten sind, daß der größte Teil der Zugkräfte über die an Vorder- und Hinterkante des Segels (48) angreifenden Fangleinen (57) wirkt. Hierdurch werden die freien Enden der Versteifungsstreben (61) nach unten gekrümmt. Dies wiederum hat zur Folge, daß das Segel (48) zwischen den freien Enden der Versteifungsstreben (61) horizontal gespannt wird und seine konvexe Form durch die auf das Segel (48) wirkende Auftriebskraft erhält. Bei einer eventuellen Fallböe wird das Segel (48) von oben eingedrückt. Gleichzeitig verlieren die Fangleinen (57) ihre Spannung. Damit wirken auf die Enden der Versteifungsstreben keine nach unten gerichteten Zugkräfte mehr, was zur Folge hat, daß sie sich elastisch geradebiegen. Sie nehmen dann die gestrichelte Stellung ein. Das Segel fällt dann nach innen ein und ist nach hinten hochgewölbt ist. Hierdurch entsteht eine erhebliche Widerstandserhöhung, so daß sich das Segel (48) selbsttätig abfängt, als nicht nach vorne schießt. Der Gleitschirm (47) hat dann Pendelstabilität und stabilisiert sich von selbst. Bei nachlassender Fallböe verstärken sich die Zugkräfte in den Fangleinen (57) wieder derart, daß das Segel (48) sein normales Tragflügelprofil erhält.

Die vorbeschriebene Flugstabilität insbesondere bei kritischen Flugzuständen kann auch mit anders geformten Stegen erreicht werden. So sind bei dem in der Figur (4) dargestellten Ausführungsbeispiel an der Unterseite des Segels (61) Stege (62) angenäht, deren Unterkante (63) oval geformt sind. In jede Unterkante (63) ist eine entsprechend gebogene Versteifungsstrebe (64) eingesetzt, die flexibel ausgebildet ist, beispielsweise aus einem Angelrutenstück besteht. An Vorder- und Hinterkante des Segels (61) sowie in der Mitte der Stege (62) greifen Fangleinen - beispielhaft mit (65) bezeichnet - an.

Der normale Flugzustand ist mit durchgezogenen Linien dargestellt. Das Segel (61) ist aufgrund der Auftriebskräfte leicht nach oben gewölbt. Die Enden der Versteifungsstrebe (64) sind etwas elastisch nach unten gezogen, und zwar aufgrund der von den Fangleinen (65) an der Vorder- und Hinterkante des Segels (61) ausgehenden Zugkräfte, die aufgrund entsprechender Längenauslegung größer sind als die Zugkräfte der mittleren Fangleinen (65). Bei einer Fallböe lassen diese Zugkräfte nach, so daß sich die Enden der Versteifungsstrebe (64) nach oben biegen. Das Segel (61) fällt ein und ist hinten nach oben gewölbt mit der Folge, daß es einen hohen Widerstand erhält (gestrichelt dargestellt). Diese Ausformung des Segels (61) kann noch durch einen zusätzlichen Gummizug (66), der in dem Steg (62) eingenäht ist, verstärkt werden.

In Figur (5) ist eine ähnliche Ausführungsform dargstellt. Sie unterscheidet sich von dem Ausführungsbeispiel gemäß Figur (4) nur dadurch, daß nicht ein vertikaler Gummizug (66) vorgesehen ist, sondern ein zwischen dem vorderen und dem hinteren Bereich der Versteifungsstrebe (64) gespannter Gummizug (67). Bei einer Fallböe unterstützt er das Hochbiegen der Endbereiche der Versteifungsstrebe (64). Die dann gegebene Formgebung ist den gestrichelten Linien zu entnehmen.

In den Figuren (6) und (7) sind Ausführungsbeispiele dargestellt, bei denen das Segel (68) mit trapezförmigen Stegen (69) versehen ist. An dem jeweils gezeigten Steg (69) greifen Fangleinen (70) an, und zwar an Vorder- und Hinterkante des Segels (68) sowie an den Ecken der Stege (69). In die Vorder- und Hinterkante der Stege (69) sind Versteifungsstreben (71, 72) eingenäht. Die jeweils einander zugewandten Enden sind bei dem Ausführungsbeispiel gemäß Figur (6) durch zwei Verbindungsstreben (73, 74) gekoppelt, und zwar über Gelenke (75, 76, 77). Die Verbindungsstreben (73, 74) bilden mit der Unterkante des Steges (69) ein Dreieck. Bei dem Ausführungsbeispiel gemäß Figur (7) sind die einander zugewandten Enden der Versteifungsstreben (71, 72) über eine bogenförmige Verbindungsstrebe (78) gekoppelt, wobei die Verbindung über Gelenke (79, 80) hergestellt wird.

Die Formänderung des Segels (68) bei verschiedene Flugzuständen ist in etwa vergleichbar mit dem nach dem in Figur (3) dargestellten Ausführungsbeispiel. Bei normalem Flugzustand (durchgezogen gezeichnet) werden die Versteifungsstreben (71, 72) aufgrund der von den Fangleinen (70) an der Vorder- und Hinterkante des Segels (68) ausgehenden Zugkräfte leicht nach unten gebogen, weil diese Fangleinen entsprechend kürzer sind und damit mehr Zug erzeugen als die mittleren Fangleinen (70). Darüber spannt sich das Segel (68). Bei einer Fallböe lassen die Zugkräfte in den Fangleinen (70) nach, so daß die Versteifungsstreben (71, 72) elastisch zurück und nach oben federn, also sich gerade richten. Das Segel (68) fällt ein und wird nach hinten hochgewölbt, so daß der Widerstand des Segels (68) stark ansteigt (gestrichelt gezeichnet). Hierdurch vergrößert sich der Widerstand drastisch mit der Folge, daß Pendelstabilität eintritt.

Bei dem Ausführungsbeispiel gemäß Figur (8) sind in ein Segel (81) in regelmäßigen Abständen Segellatten (82) eingelassen, die sich über die gesamte Tiefe des Segels (81) erstrecken und aus elastisch federndem Material bestehen. An den Segellatten (82) greifen Fangleinen - beispielhaft mit (83) bezeichnet - an, und zwar jeweils an der Vorder- und Hinterkante des Segels (81) sowie etwa in der Mitte der Segellatte (82). Die Segellatte (82) ist so geformt, daß sie in spannungslosem Zustand - gestrichelt dargestellt - nach hinten hochgebogen ist. Dies kann zusätzlich durch eine Zugfeder (84) unterstützt werden, die einerends im vorderen Bereich der Segellatte (82) und anderenends an deren Hinterkante befestigt ist. Bei der Zugfeder (84) kann es sich beispielsweise um einen Gummizug handeln.

In normalem Flugzustand (durchgezogen gezeichnet) wird die Segellatte im hinteren Bereich aufgrund der Zugkräfte der Fangleinen (83) nach unten gezogen, so daß sich in etwa ein leicht hochgewölbtes Tragflächenprofil ergibt. Lassen die Zugkräfte nach aufgrund einer von oben auf das Segel (81) wirkenden Fallböe, biegt sich die Segellatte (82) im hinteren Bereich nach oben, so daß das Segel einen S-förmigen Schlag erhält (gestrichelt gezeichnet). Hierdurch erhöht sich der Widerstand stark, so daß der Gleitschirm Pendelstabilität erhält.

Die Ausführungsform gemäß Figur (8) ist zusätzlich mit Stegen, wie sie in den Figuren (3) bis (7) dargestellt sind, kombiniert, wodurch die Formänderungswirkung der Segellatten (82) unterstützt und insbesondere die Stabilität in Spannweitenrichtung wesentlich verbessert wird. Die Stege sind jedoch nicht eingezeichnet.

**Patentansprüche**

1. Gleitschirm mit einem flügelähnlichen Segel, an dessen Unterseite sich im wesentlichen parallel zur vorgesehenen Flugrichtung nach unten erstreckende Stege angebracht sind, wobei Fangleinen zumindest an den Stegen angreifen, und die freie Enden der Fangleinen zu einer Trageinrichtung für die Aufnahme einer Person zusammenlaufen, dadurch gekennzeichnet, daß die Stege (34 bis 39; 49 bis 54; 62; 69) mit Versteifungen (41 bis 46; 61, 64, 71, 72) versehen sind, die die Stege (34 bis 39; 49 bis 54; 62; 69) wenigstens unter Zugbelastung der Fangleinen (4 bis 18; 57; 65; 70; 83) im Flug im wesentlichen in horizontaler Richtung aufspannen.

2. Gleitschirm nach Anspruch 1, dadurch gekennzeichnet, daß die Stege flächige Versteifungen aufweisen oder daraus bestehen.

3. Gleitschirm nach Anspruch 1, dadurch gekennzeichnet, daß die Stege (34 bis 39; 49 bis 54; 62, 69) aus biegeschlaffem Material bestehen und in diese Versteifungsstreben (41 bis 46; 61, 64, 71 72) eingesetzt sind.

4. Gleitschirm nach Anspruch 3,
dadurch gekennzeichnet, daß im Bereich der Hinterkante (12, 56) des Segels (2, 48, 61, 68, 81) und/oder der Stege (34 bis 39) Fangleinen (4 bis 18, 57, 65, 70, 83) angreifen.

5. Gleitschirm nach Anspruch 3 oder 4,
dadurch gekennzeichnet, daß die Fangleinen (4 bis 18, 57, 65, 70, 83) an Vorder- und/oder Hinterkante des Segels (2, 48, 61, 68, 81) jeweils in der Ebene der Stege (34 bis 39, 49 bis 54, 62, 69) angreifen.

6. Gleitschirm nach einem der Ansprüche 3 bis 5,
dadurch gekennzeichnet, daß die Versteifungsstreben (61, 64, 71, 72) federnd biegsam ausgebildet und derart in den Stegen (49 bis 54; 62, 69) angeordnet sind, daß das Segel (2, 48, 61, 68) im entlasteten Zustand der Fangleinen wenigstens im hinteren Bereich hochgewölbt ist, die Versteifungsstreben (61, 64, 71, 72) bei Flugbelastung jedoch wenigstens im hinteren Bereich unter Bildung eines Tragflächenprofils nach unten federnd gebogen sind.

7. Gleitschirm nach Anspruch 6,
dadurch gekennzeichnet, daß die Stege (62) eine gebogene Unterkante (63) aufweisen und in diese entsprechend gebogene Versteifungsstreben (64) eingesetzt sind.

8. Gleitschirm nach Anspruch 6,
dadurch gekennzeichnet, daß die Stege (49 bis 54) Dreiecksform mit nach unten gerichteter Dreiecksspitze haben und daß die freien Dreieckskanten jeweils mit Versteifungsstreben (61) versehen sind.

9. Gleitschirm nach Anspruch 6,
dadurch gekennzeichnet, daß die Stege (69) Trapezform haben und zumindest die freien Hinterkanten der Stege Versteifungsstreben (71 , 72) aufweisen.

10. Gleitschirm nach Anspruch 9
dadurch gekennzeichnet, daß die unteren Enden der Versteifungsstreben (71, 72) über wenigstens eine weitere Verbindungsstrebe (78) miteinander gekoppelt sind.

11. Gleitschirm nach einem der Ansprüche 1 bis 10,
dadurch gekennzeichnet, daß das Segel (81) in Flugrichtung verlaufende Segellatten (82) aufweist, die federnd biegsam ausgebildet sind und im entlasteten Zustand nach hinten leicht hochgebogen sind, bei Flugbelastung jedoch wenigstens im hinteren Bereich unter Bildung eines Tragflächenprofils aus der hochgebogenen Stellung nach unten federnd gebogen sind.

12. Gleitschirm nach Anspruch 11,
dadurch gekennzeichnet, daß an den hinteren Enden der Segellatten (82) Zugfedern (84) zum Hochbiegen dieser Enden angreifen.

13. Gleitschirm nach einem der Ansprüche 1 bis 12,
dadurch gekennzeichnet, daß jeweils zwischen den Stegen (53) bzw. den Segellatten (82) in die Vorderkante des Segels einzelne, flexible Versteifungsholme (60) eingearbeitet sind.

**Claims**

1. A paraglider with a sail similar to a wing, on the underside of which webs are attached extending downwards substantially parallel to the planned direction of flight, wherein rigging lines are attached at least to the webs, and the free ends of the rigging lines converge towards a carrying device to take a person, characterised in that the webs (34 to 39; 49 to 54; 62; 69) are provided with stiffeners (41 to 46; 61, 64, 71, 72) which stretch the webs (34 to 39; 49 to 54; 62; 69), at least under the tensile loading of the rigging lines (4 to 18; 57; 65; 70; 83), substantially in a horizontal direction in flight.

2. A paraglider according to Claim 1, characterised in that the webs have plane stiffeners or consist of them.

3. A paraglider according to Claim 1, characterised in that the webs (34 to 39; 49 to 54; 62, 69) consist of material which is limp and flexible, and that stiffening braces (41 to 46; 61, 64, 71, 72) are inserted in them.

4. A paraglider according to Claim 3, characterised in that rigging lines (4 to 18, 57, 65, 70, 83) are attached in the region of the rear edge (12, 56) of the sail (2, 48, 61, 68, 81) and/or of the webs (34 to 39).

5. A paraglider according to Claims 3 or 4, characterised in that the rigging lines (4 to 18, 57, 65, 70, 83) at the front and/or the rear edge of the sail (2, 48, 61, 68, 81) are each attached in the plane of the webs (34 to 39, 49 to 54, 62, 69).

6. A paraglider according to any one of Claims 3 to 5, characterised in that the stiffening braces (61, 64, 71, 72) are constructed so that they are elastically flexible and are arranged in the webs (49 to 54; 62, 69) in such a way that the sail (2, 48, 61, 68) is curved upwards, at least in its rear region, in the unloaded state of the rigging lines, but that the stiffening braces (61, 64, 71, 72) are bent elastically downwards when loaded in flight, at least in their rear regions, with the formation of an aerofoil profile.

7. A paraglider according to Claim 6, characterised in that the webs (62) have a bent lower edge (63) and that correspondingly bent stiffening braces (64) are inserted in this.

8. A paraglider according to Claim 6, characterised in that the webs (49 to 54) are triangular in shape with the apex of the triangle directed downwards, and that each free edge of the triangle is provided with stiffening braces (61).

9. A paraglider according to Claim 6, characterised in that the webs (69) are trapezium-shaped and that at least the free rear edges of the webs have stiffening braces (71, 72).

10. A paraglider according to Claim 9, characterised in that the lower ends of the stiffening braces (71, 72) are coupled to each other by means of at least one further stiffening brace (78).

11. A paraglider according to one of Claims 1 to 10, characterised in that the sail (81) has sail laths (82) running in the direction of flight, which are constructed so that they are elastically flexible and which are bent slightly upwards towards the rear in their unloaded state, but which on being loaded in flight are bent elastically downwards from their upwardly bent position, at least in their rear regions, with the formation of a aerofoil profile.

12. A paraglider according to Claim 11, characterised in that tension springs (84) are attached to the rear ends of the sail laths (82) to bend these ends upwards.

13. A paraglider according to any one of Claims 1 to 12, characterised in that individual, flexible stiffening spars (60) are worked into the front edge of the sail between each web (53) or between each sail lath (82).

**Revendications**

1. Parachute planeur muni d'une voilure du type aile, à la face inférieure de laquelle sont implantées des membrures s'étendant vers le bas, pour l'essentiel parallèlement à la direction de vol prévue, des suspentes étant rattachées au moins aux membrures, et les extrémités libres des suspentes convergeant vers un dispositif de support destiné à recevoir une personne,
caractérisé par le fait que les membrures (34 à 39 ; 49 à 54 ; 62 ; 69 ) sont pourvues de renforts (41 à 46 ; 61, 64, 71, 72) qui tendent les membrures (34 à 39 ; 49 à 54 ; 62 ; 69) en vol, pour l'essentiel dans une direction horizontale, au moins sous la contrainte de traction des suspentes (4 à 18 ; 57 ; 65 ; 70 ; 83).

2. Parachute planeur selon la revendication 1, caractérisé par le fait que les membrures présentent des renforts en nappe, ou sont constituées par ces derniers.

3. Parachute planeur selon la revendication 1, caractérisé par le fait que les membrures (34 à 39 ; 49 à 54 ; 62, 69) consistent en un matériau mou à la flexion, et des entretoises de rigidification (41 à 46 ; 61, 64, 71, 72) sont intégrées dans lesdites membrures.

4. Parachute planeur selon la revendication 3, caractérisé par le fait que des suspentes (4 à 18, 57, 65, 70, 83) sont rattachées dans la région du bord postérieur (12, 56) de la voilure (2, 48, 61, 68, 81) et/ou des membrures (34 à 39).

5. Parachute planeur selon la revendication 3 ou 4,
caractérisé par le fait que les suspentes (4 à 18, 57, 65, 70, 83) sont rattachées, au(x) bord(s) antérieur et/ou postérieur de la voilure (2, 48, 61, 68, 81), à chaque fois dans le plan des membrures (34 à 39, 49 à 54, 62, 69).

6. Parachute planeur selon l'une des revendications 3 à 5,
caractérisé par le fait que les entretoises de rigidification (61, 64, 71, 72) sont réalisées douées de souplesse élastique, et sont agencées dans les membrures (49 à 54 ; 62, 69) de façon telle que, à l'état soulagé des suspentes, la voilure (2, 48, 61, 68) soit bombée vers le haut au moins dans la région postérieure, mais que, lors d'une contrainte en vol, les entretoises de rigidification (61, 64, 71, 72) soient cependant fléchies élastiquement vers le bas, au moins dans la région postérieure, en formant un profil à surface de sustentation.

7.  Parachute planeur selon la revendication 6, caractérisé par le fait que les membrures (62) présentent un bord inférieur courbe (63), et des entretoises de rigidification (64) à courbure correspondante sont intégrées dans ce bord.

8.  Parachute planeur selon la revendication 6, caractérisé par le fait que les membrures (49 à 54) possèdent une forme triangulaire à pointe de triangle dirigée vers le bas ; et par le fait que les bords libres du triangle sont respectivement dotés d'entretoises de rigidification (61).

9.  Parachute planeur selon la revendication 6, caractérisé par le fait que les membrures (69) possèdent une forme trapézoïdale, et au moins les bords postérieurs libres desdites membrures présentent des entretoises de rigidification (71, 72).

10. Parachute planeur selon la revendication 9, caractérisé par le fait que les extrémités inférieures des entretoises de rigidification (71, 72) sont accouplées les unes aux autres par l'entremise d'au moins une entretoise supplémentaire de solidarisation (78).

11. Parachute planeur selon l'une des revendications 1 à 10, caractérisé par le fait que la voilure (81) présente des lattes (82) qui s'étendent dans la direction du vol, sont réalisées douées de souplesse élastique et sont légèrement fléchies vers le haut et vers l'arrière à l'état soulagé, mais sont cependant, lors d'une contrainte en vol, fléchies élastiquement vers le bas à partir de la position fléchie vers le haut, au moins dans la région postérieure, en formant un profil à surface de sustentation.

12. Parachute planeur selon la revendication 11, caractérisé par le fait que des ressorts de traction (84) sont en prise avec les extrémités postérieures des lattes (82) de la voilure, en vue de fléchir ces extrémités vers le haut.

13. Parachute planeur selon l'une des revendications 1 à 12, caractérisé par le fait que des longerons flexibles de rigidification (60) individuels sont intégrés dans le bord antérieur de la voilure, respectivement entre les membrures (53) ou les lattes (82) de ladite voilure.

Fig. 1

Fig. 3

Fig. 2

Fig. 8

Fig. 4

Fig. 5

Fig. 6

Fig. 7